Europäisches Patentamt

European Patent Office

Office européen des brevets

(11) Veröffentlichungsnummer: **0 212 299**
**B1**

(12) EUROPÄISCHE PATENTSCHRIFT

(45) Veröffentlichungstag der Patentschrift:
**04.10.89**

(51) Int. Cl.⁴: **F15B 15/14**

(21) Anmeldenummer: **86110097.2**

(22) Anmeldetag: **23.07.86**

(54) Hydraulischer Belastungszylinder mit hydrostatisch gelagerter Kolbenstange und Verdrehsicherung.

(30) Priorität: **21.08.85 DE 3529880**

(43) Veröffentlichungstag der Anmeldung:
**04.03.87 Patentblatt 87/10**

(45) Bekanntmachung des Hinweises auf die Patenterteilung:
**04.10.89 Patentblatt 89/40**

(84) Benannte Vertragsstaaten:
**CH DE FR GB LI**

(56) Entgegenhaltungen:
**EP-A- 0 074 888
DE-A- 2 301 443
DE-A- 2 459 560
US-A- 3 518 920
US-A- 3 994 539

PATENT ABSTRACTS OF JAPAN, Band 8,
Nr. 177 (M-317)[1614], 15. August 1984**

(73) Patentinhaber: **CARL SCHENCK AG,
Landwehrstrasse 55 Postfach 40 18,
D-6100 Darmstadt(DE)**

(72) Erfinder: **Stoll, Constantin, Alfred-Messel-Weg 38,
D-6100 Darmstadt(DE)**

(74) Vertreter: **Brandt, Ernst-Ulrich, Fa. Carl Schenck AG
Patentabteilung Landwehrstrasse 55 Postfach 40 18,
D-6100 Darmstadt 1(DE)**

## Beschreibung

Die Erfindung betrifft einen hydraulischen Belastungszylinder, insbesondere für Prüfmaschinen, mit einem im Zylinder geführten Kolben und einer im Querschnitt vieleckig ausgebildeten und ebene oder leicht gekrümmte Führungsflächen aufweisenden, gegen Verdrehung gesicherten Kolbenstange.

Bei hydraulischen und pneumatischen Zylindern sind Verdrehsicherungen gegen die Verdrehung von Kolben und Kolbenstange bekannt. Einfache Zylinderausführungen weisen mechanische Führungselemente wie z. B. Führungsstangen auf, die in geeigneter Weise an der Kolbenstange befestigt und an der Außenseite des Zylinders axial beweglich gelagert sind. Die Führungselemente machen die Bewegungen der Kolbenstange mit, wobei eine Verdrehung der Kolbenstange durch die am Zylindergehäuse angeordneten Lagerstellen für die Führungselemente verhindert wird. Solche Anordnungen sind konstruktiv aufwendig und benötigen zusätzlich Platz.

Aus der DE-A 2 459 560 ist ein Zylinder mit gegen Verdrehung gesicherter Kolbenstange bekannt, bei dem die Kolbenstange einen nicht kreisrunden Querschnitt, z.B. in Form eines Polygonprofils aufweist. Zur Abdichtung der Kolbenstange ist eine Dichtung vorgesehen, die im eingebauten Zustand den gleichen Querschnitt hat wie die Kolbenstange selbst. Durch die Verwendung von Dichtungen ist diese Anordnung reibungsbehaftet.

Bei einem anderen bekannten hydraulischen Belastungszylinder der eingangs genannten Gattung (US-A 3 518 920) ist die im Querschnitt vieleckige Kolbenstange zur Verdrehsicherung an komplementär gestalteten Gleitführungen am Zylinderdeckel geführt. Die an den Gleitführungen auftretende Reibung kann verhältnismäßig hoch sein, insbesondere wenn ein Drehmoment auf die Kolbenstange ausgeübt wird. Es ist zwar bekannt (DE-A 2 301 443), zur Reibungsverminderung hydrostatische Lagerungen für Kolbenstangen vorzusehen. Dabei handelt es sich aber um zylindrische Kolbenstangen, die kein Drehmoment auf den Zylinderdeckel übertragen.

Aufgabe der Erfindung ist es daher, einen hydraulischen Belastungszylinder so auszubilden, daß auch bei der Übertragung eines Drehmoments die Reibung an den Führungsflächen möglichst gering bleibt.

Die Aufgabe wird erfindungsgemäß dadurch gelöst, daß jeder Führungsfläche der Kolbenstange mindestens eine hydrostatische Lagerstelle am Zylinderdeckel zugeordnet ist und daß die hydrostatischen Lagerstellen zueinander diagonal gegenüberliegenden Ecken der Kolbenstange hin versetzt angeordnet sind.

Neben der reibungsfreien Lagerung und der einfachen und platzsparenden Bauweise ermöglicht die vorgeschlagene Anordnung auch die praktisch reibungsfreie Aufnahme und/oder Übertragung von Drehmomenten, die an der Kolbenstange wirken, auf den Belastungszylinder.

Durch die außermittige Anordnung der hydrostatischen Lagerstellen wird eine verbesserte Drehmomentübertragung erreicht.

Die Erfindung wird nachstehend an Ausführungsbeispielen in der Zeichnung dargestellt und in der Beschreibung näher erläutert. Es zeigen:

Fig. 1 Hydraulischer Belastungszylinder mit einer einseitig nach außen geführten Kolbenstange (Längsschnitt)

Fig. 2 Radialschnitt durch den Zylinderdeckel der Anordnung nach Fig. 1 und Fig. 3

Fig. 3 Belastungszylinder mit doppelseitiger Kolbenstange

Fig. 4 Ausführungsvariante zur Anordnung nach Fig. 2

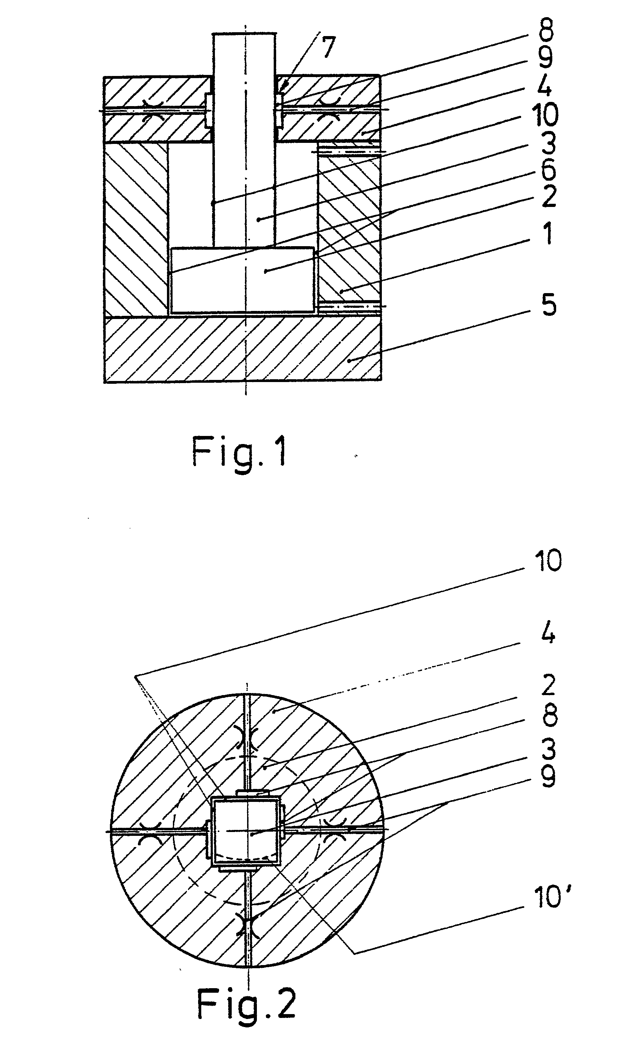

In Fig. 1 ist ein Belastungszylinder 1 mit einer einseitig nach außen geführten Kolbenstange dargestellt. Der Belastungszylinder weist einen runden Kolben 2 üblicher Bauart mit einer Kolbenstange 3 auf, die durch den Zylinderdeckel 4 nach außen geführt ist. Ein Zylinderdeckel 5 schließt die zweite Stirnseite des Belastungszylinders ab. Der Kolben 2 ist mit sehr kleinem Spiel im Belastungszylinder 1 eingepaßt, so daß Spaltdichtungen 6 entstehen und besondere Dichtungselemente zwischen Kolben und Zylinderwand entfallen können. Es kann jedoch auch eine andere Art der Abdichtung des Kolbens im Zylinder vorgesehen werden. Weitere konstruktive Einzelheiten des Belastungszylinders sowie Einzelheiten der Druckmittelzu- und Abführung sind für das Verständnis der Erfindung nicht erforderlich und daher nicht dargestellt und beschrieben.

Im Gegensatz zu den bekannten und bisher bei hydraulischen Belastungszylindern üblichen Kolbenstangen mit Kreisquerschnitt weist die Kolbenstange im dargestellten Ausführungsbeispiel einen quadratischen Querschnitt auf. Sie ist also nicht kreiszylinderförmig, sondern als Vierkantstange ausgebildet. Die vier Seiten der Stange bilden hierbei Führungsflächen 10, die mit hydrostatischen Lagern im Zylinderdeckel 4 zusammenwirken. Die Führungsflächen können in Umfangsrichtung eben oder leicht gekrümmt, wie bei 10' (Fig. 2) gestrichelt angedeutet, ausgebildet sein. Die Gegenflächen und die Lagertaschen 8 werden der Form bzw. der Krümmung der Führungsflächen entsprechend ausgebildet-

Die Führungsflächen 10, 10' und/oder die Gegenflächen am Zylinderdeckel 4 können mit einer dünnen Beschichtung, z. B. aus Kunststoff, versehen sein zur Verbesserung des Notlaufverhaltens.

Die hydrostatischen Lager für die Kolbenstange 3 sind im Zylinderdeckel 4 angeordnet. Hierzu sind Lagerstellen 7 mit Lagertaschen 8 und Druckölzuführungen 9 vorgesehen. Die Druckölzuführungen weisen, wie in der Zeichnung angedeutet, Drosselstellen für die Steuerung der Druckmittelzufuhr auf. Die Grundprinzipien sowie der Aufbau und die Wirkungsweise von hydrostatischen Lagern sind bekannt, so daß weitere Angaben hierzu nicht erforderlich sind.

In Fig. 2 ist ein Radialschnitt durch den Zylinderdeckel 4 dargestellt. An jeder Seite der im Querschnitt quadratischen Kolbenstange 3 ist eine La-

gertasche 8 mit Drucköbzuführungen 9 für die hydrostatische Lagerung angeordnet. Die Lagertaschen 8 sind hierbei zu zwei diagonal einander gegenüberliegenden Ecken der Kolbenstange 3 hin versetzt. Durch die versetzte Anordnung ergibt sich eine verbesserte Drehmomentübertragung in beiden Drehrichtungen von der Kolbenstange 3 auf den Zylinderdeckel 4 bzw. den Belastungzylinder 1.

Die Führungsflächen können eben oder leicht gekrümmt, wie bei 10' (Fig. 2) gestrichelt dargestellt, ausgebildet sein. Durch die dargestellte Anordnung wird die Kolbenstange 3 im Belastungszylinder 1 verdrehsicher und reibungsfrei geführt. Gleichzeitig können Drehmomente an der Kolbenstange aufgenommen und auf den Belastungszylinder übertragen werden.

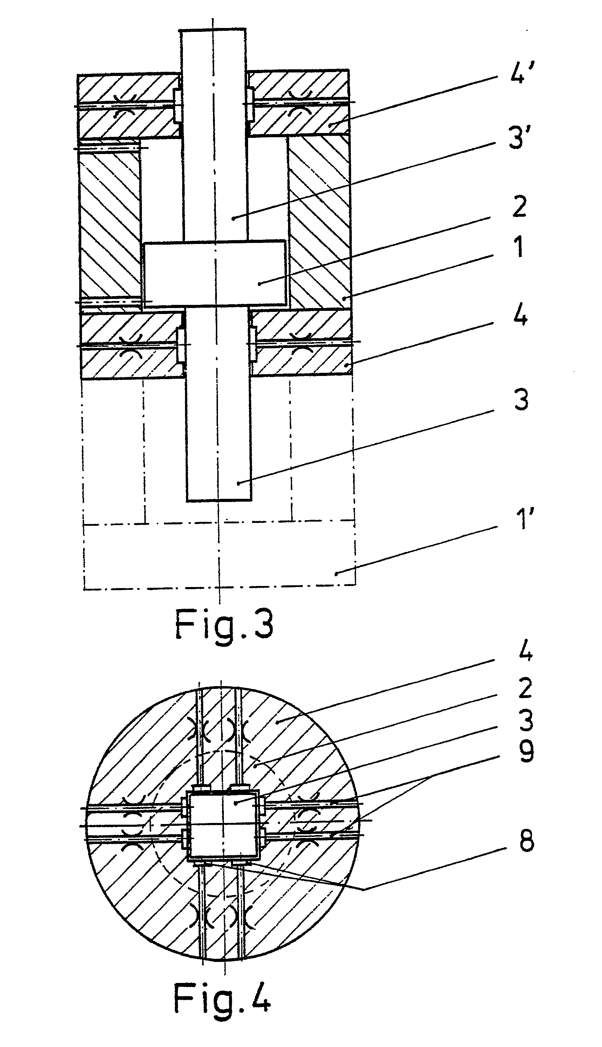

In Fig. 3 ist ein Belastungszylinder dargestellt, bei dem die Kolbenstange auf beiden Stirnseiten des Zylinders nach außen geführt ist. Die Kolbenstange 3 ist im Querschnitt quadratisch ausgebildet und in gleicher Weise wie in Fig. 1 und 2 beschrieben im Zylinderdeckel 4 geführt bzw. gelagert. Die Kolbenstange 3, ist rund ausgebildet und in bekannter Weise im Zylinderdeckel 4, hydrostatisch gelagert. Sie kann jedoch auch wie die Kolbenstange 3 ausgeführt werden. Sowohl die Kolbenstange 3', als auch die Kolbenstange 3 können z. B. mit zu prüfenden Bauteilen verbunden sein und zur Belastung dieser Bauteile verwendet werden.

Der Belastungszylinder 1 kann, wie bei 1', gestrichelt angedeutet, auch verlängert ausgebildet werden, so daß die Kolbenstange 3 im Zylinder gekapselt angeordnet ist.

In Fig. 4 ist eine Ausführungsvariante der hydrostatischen Lagerung im Lagerdeckel 4 dargestellt. Hierbei sind an jeder Seite der im Querschnitt quadratischen Kolbenstange 3 zwei Lagerstellen mit Lagertaschen 8 und Ölzuführungen 9 in Umfangsrichtung mit Abstand voneinander angeordnet. Durch die dargestellte Anordnung können an der Kolbenstange 3 auch hohe Drehmomente aufgenommen und reibungsfrei auf den Belastungszylinder übertragen werden.

Bei rechteckigem Querschnitt der Kolbenstange können an den langen Rechteckseiten je zwei und an den kurzen Seiten je eine Lagerstelle angeordnet werden. Auch mit einer solchen Anordnung, die prinzipiell auch bei quadratischem Kolbenstangenquerschnitt möglich ist, sind hohe Drehmomente zwischen Kolbenstange und Belastungszylinder übertragbar.

Anstelle des bei den Ausführungsbeispielen dargestellten und beschriebenen quadratischen Kolbenstangenquerschnitts ist auch eine dreieckige oder vieleckige Querschnittsausbildung der Kolbenstange möglich. Bei allen Ausführungen können die Ecken zwischen den Führungsflächen abgerundet sein.

## Patentansprüche

1. Hydraulischer Belastungszylinder (1), insbesondere für Prüfmaschinen, mit einem im Zylinder geführten Kolben (2) und einer im Querschnitt vieleckig ausgebildeten und ebene oder leicht gekrümmte Führungsflächen (10, 10') aufweisenden, gegen Verdrehung gesicherten Kolbenstange (3), dadurch gekennzeichnet, daß jeder Führungsfläche (10, 10') der Kolbenstange (3) mindestens eine hydrostatische Lagerstelle (7) am Zylinderdeckel (4, 4') zugeordnet ist und daß die hydrostatischen Lagerstellen (7) zu einander diagonal gegenüberliegenden Ecken der Kolbenstange (3) hin versetzt angeordnet sind.

2. Hydraulischer Belastungszylinder nach Anspruch 1, dadurch gekennzeichnet, daß die Kolbenstange (3) im Querschnitt im wesentlichen quadratisch oder rechteckig ausgebildet ist.

3. Hydraulischer Belastungszylinder nach Anspruch 1 oder 2, dadurch gekennzeichnet, daß den Führungsflächen (10, 10') jeweils zwei in Umfangsrichtung mit Abstand zueinander angeordnete hydrostatische Lagerstellen (7) zugeordnet sind.

## Claims

1. A hydraulic loadiag cyliner (1), particularly for testing machines, having a piston (2) guided in the cylinder and a piston rod (3) which is of polygonal construction in cross-section, comprises plane or slightly curved guide surfaces (10, 10') and is secured against torsion, characterised in that associated with each guide surface (10, 10') of the piston rod (3) is at least one hydrostatic bearing (7) on the cylinder cover (4, 4'), and that the hydrostatic bearings (7) are arranged offset towards diagonally opposite corners of the piston rod (3).

2. A hydraulic loading cylinder according to Claim 1, characterised in that the piston rod (3) is made substantially square or rectangular in crossection.

3. A hydraulic loading cylinder according to Claim 1 or 2, characterised in that two hydrostatic be a rings (7) arranged spaced apart in the circumferential direction, are associated with each of the guide surfaces (10, 10').

## Revendications

1. Vérin hydraulique de puissance (1), en particulier pour machines de contrôle, comportant un piston (2) guidé dans le cylindre et une tige de piston (3) de section polygonale et présentant des surfaces de guidage (10, 10') planes ou légèrement incurvées, caractérisé et en ce qu'au moins un point d'appui hydrostatique (7) sur le couvercle de cylindre (4, 4') correspond à chaque surface de guidage (10, 10') de la tige de piston (3), et en ce que les points d'appui hydrostatiques (7) sont décalées vers des coins diagonalement opposés de la tige de piston (3).

2. Vérin hydraulique de puissance selon la revendication 1, caractérisé en ce que la tige de piston (3) a une section de conformation sensiblement carrée ou rectangulaire.

3. Vérin hydraulique de puissance selon la revendication 1 ou 2, caractérisé en ce que deux points d'appui hydrostatiques (7) séparés l'un de l'autre en direction périphérique correspondent à chacune des surfaces de guidage (10, 10').

EP 0 212 299 B1

Fig. 1

Fig. 2

Fig.3

Fig.4